# EUROPEAN PATENT APPLICATION

(11) **EP 4 122 837 A1**
(43) Date of publication of application: **25.01.2023**
(21) Application number: 20926095.9
(22) Date of filing: 01.09.2020
(51) Int. Cl.: B65D 21/02, B65D 5/24

(54) **ASSEMBLING TYPE PAPER CONTAINER**

(30) Priority: 18.03.2020 JP 2020047582
(71) Applicant: Tokan Kogyo Co., Ltd., Tokyo 141-0022 (JP)
(72) Inventor: TAKEGUCHI, Shiro, Tokyo 141-0022 (JP); KAWANO, Ryota, Tokyo 141-0022 (JP); TAKEI, Sho, Tokyo 141-0022 (JP); KAIMORI, Tomokazu, Tokyo 141-0022 (JP)
(74) Representative: Rings, Rolf
(86) International application number: PCT/JP2020/033076
(87) International publication number: WO 2021/186764

(57) **Abstract**

[Problem]

Provided is an assembled paper container that allows suppressing containers becoming difficult to be separated even when they are stacked.

[Solution]

An assembled paper container (1) according to one embodiment includes a bottom surface (121), a plurality of side surfaces (122), and a flange section (13) connected to the plurality of side surfaces (122) and becoming flush with a top surface (131) after assembly. The side surface (122) below the flange section (13) is provided with a rib section (5) having a thickness t in a height direction and extending from the side surface (122) toward an edge of the flange section (13).

## Description

### TECHNICAL FIELD

Embodiments of the present invention relate to an assembled paper container.

### BACKGROUND ART

There has been known an assembled paper container in which a tray shaped container main body including a flange section in an upper end is assembled from a paper-made blank sheet using paper as a main raw material. In the assembled paper container, a thermoplastic resinous film having resin property is sometimes attached to an inner surface of the container main body and a top surface of the flange section (Patent Document 1 and Patent Document 2). The assembled paper container with the resinous film has resin property, and thus is mainly used as a tray or a bowl for containing food products and the like.

Compared with a plastic container, the assembled paper container is a product that can, for example, suppress generation of secondary microplastics occurred in the environment, and be environmentally considerate. Furthermore, the resinous film can be stripped off from the container main body, thereby allowing the resinous film to be separated from the container main body, namely paper, and thus the resinous film and the container main body can be recycled individually. Given these advantages, the assembled paper container is expected to be used as a packaging container for food products and the like or a storage container for food products and the like by applying, for example, Modified Atmosphere Packaging (MAP).

Patent Document 1: JP-A-H6-293334
Patent Document 2: JP-A-2019-172339

### DISCLOSURE OF THE INVENTION

### PROBLEMS TO BE SOLVED BY THE INVENTION

The assembled paper container is shipped stacked in a certain unit number of pieces, such as 50 pieces. However, when the assembled paper containers are stacked, containers on a lower level side are weighed down by containers on an upper level side. Therefore, the containers on the lower level side deeply fit with one another and become difficult to be separated.

The embodiments of the present invention provide an assembled paper container that allows suppressing the containers becoming difficult to be separated even when they are stacked.

### SOLUTIONS TO THE PROBLEMS

An assembled paper container according to a first aspect of the invention is an assembled paper container assembled from a blank sheet using paper as a main material. The assembled paper container includes a bottom surface, a plurality of side surfaces standing upright from the bottom surface, and a flange section connected to the plurality of side surfaces and becoming flush with a top surface after assembly. The side surface below the flange section is provided with a rib section having a thickness in a height direction and extending from the side surface toward an edge of the flange section.

In an assembled paper container according to a second aspect of the invention, which is in the first aspect, the rib section is molded integrally with one of the side surfaces, and the rib section molded integrally with the side surface is flat with respect to the side surface.

In an assembled paper container according to a third aspect of the invention, which is in the second aspect, an upper end portion of the rib section is folded together with the side surface toward the edge of the flange section.

In an assembled paper container according to a fourth aspect of the invention, which is in the first aspect, the rib section is molded integrally with one of the side surfaces, and the rib section molded integrally with the side surface is folded with respect to the side surface.

In an assembled paper container according to a fifth aspect of the invention, which is in any one of the first to fourth aspects, an upper end corner part of the rib section is rounded.

In an assembled paper container according to a sixth aspect of the invention, which is in any one of the first to fifth aspects, a lower end of the rib section has the thickness in the height direction that is inclined to decrease in thickness toward the edge of the flange section.

In an assembled paper container according to a seventh aspect of the invention, which is in any one of the first to sixth aspects, the plurality of side surfaces includes a plurality of side surfaces for molding flange section, and side surfaces for bonding that bond together the side surfaces for molding flange section, and the rib section is molded integrally with the side surface for bonding.

An assembled paper container according to an eighth aspect of the invention is an assembled paper container assembled from a blank sheet using paper as a main material. The assembled paper container includes a bottom surface, a plurality of side surfaces standing upright from the bottom surface, and a flange section connected to the plurality of side surfaces and becoming flush with a top surface after assembly. The plurality of side surfaces includes a plurality of side surfaces for molding flange section, and side surfaces for bonding that bond together the side surfaces for molding flange section. The side surface for bonding below the flange section is provided with a rib section made by trough folding an intermediate portion of the side surface for bonding to generate a thickness in the height direction.

An assembled paper container according to a ninth aspect of the invention is an assembled paper container assembled from a blank sheet using paper as a main material. The assembled paper container includes a bottom surface, a plurality of side surfaces standing upright from the bottom surface, and a flange section connected to the plurality of side surfaces and becoming flush with a top surface after assembly. The plurality of side surfaces includes a plurality of side surfaces for molding flange section and side surfaces for bonding that bond together the side surfaces for molding flange section. The side surface for molding flange section below the flange section is provided with a rib section including a trough-fold molded section made by trough folding an intermediate section positioned in a middle of a mountain folded part separating the flange section and the side surface toward below the flange section to generate a thickness in a height direction, and a mountain-fold molded section made by mountain folding the side surface for molding flange section. A length of the trough-fold molded section and a length of the mountain-fold molded section are differentiated such that the flange section overlaps with the rib section.

### EFFECTS OF THE INVENTION

The assembled paper container according to the first to seventh aspects includes, on the side surface below the flange section, the rib section having the thickness in the height direction and extending from the side surface toward the edge of the flange section. Using the thickness in the height direction, the rib section allows the assembled paper containers on the lower level side to be separated from the assembled paper containers on the upper level side. Therefore, the containers deeply fitting with one another can be suppressed. Thus, the assembled paper container according to the first to seventh aspects can provide an assembled paper container that allows suppressing the containers becoming difficult to be separated even when they are stacked.

The assembled paper container according to the eighth aspect includes, in the side surface for bonding below the flange section, the rib section made by trough folding the intermediate portion of the side surface for bonding to generate the thickness in the height direction. Using the thickness in the height direction, the rib section allows the assembled paper containers on the lower level side to be separated from the assembled paper containers on the upper level side. Therefore, the containers deeply fitting with one another can be suppressed. Thus, the assembled paper container according to the eighth aspect can provide an assembled paper container that allows suppressing the containers becoming difficult to be separated even when they are stacked.

The assembled paper container according to the ninth aspect includes, in the side surface for molding flange section below the flange section, the rib section including the trough-fold molded section made by trough folding the intermediate section positioned in a middle of the mountain folded part separating the flange section and the side surface toward below the flange section to generate the thickness in the height direction, and the mountain-fold molded section made by mountain folding the side surface for molding flange section. Using the thickness in the height direction, the rib section allows the assembled paper containers on the lower level side to be separated from the assembled paper containers on the upper level side. Thus, the assembled paper container according to the ninth aspect can provide an assembled paper container that allows suppressing the containers becoming difficult to be separated even when they are stacked. Furthermore, in the assembled paper container according to the ninth aspect, a length of the trough-fold molded section, and a length of the mountain-fold molded section are differentiated such that the flange section overlaps with the rib section. Thus, the rib section of the assembled paper container on the lower level side fitting with the rib section of the assembled paper container on the upper level side can also be suppressed.

### BRIEF DESCRIPTION OF THE DRAWINGS

Fig. 1(a) is a perspective view illustrating an exemplary assembled paper container according to a first embodiment. Fig. 1(b) is a side view illustrating the exemplary assembled paper container according to the first embodiment. Fig. 1(c) is a bottom view illustrating the exemplary assembled paper container according to the first embodiment.
Fig. 2 is a plan view illustrating an exemplary blank sheet.
Fig. 3 is a plan view illustrating an example of a housing section covered with a top seal.
Fig. 4(a) is a side view of when assembled paper containers according to a reference example are stacked. Fig. 4(b) is a side view of when the assembled paper containers according to the first embodiment are stacked.
Fig. 5 is a bottom view illustrating an exemplary assembled paper container according to a first modification.
Fig. 6 is a bottom view illustrating an exemplary assembled paper container according to a second modification.
Fig. 7(a) and Fig. 7(b) are side views illustrating a rib section of the assembled paper container according to the first embodiment. Fig. 7(c) is a side view illustrating a rib section of an assembled paper container according to a third modification.
Fig. 8(a) and Fig. 8(b) are side views illustrating a rib section of an assembled paper container according to the second modification. Fig. 8(c) is a side view illustrating a rib section of an assembled paper container according to a fourth modification.
Fig. 9 is a cross-sectional view illustrating an exemplary rib section of an assembled paper container according to a second embodiment.
Fig. 10 is a side view illustrating an exemplary assembled paper container according to a third embodiment.
Fig. 11(a) is a plan view illustrating a rib section. Fig. 11(b) is a cross-sectional view along the line XIB-XIB in Fig. 11(a). Fig. 11(c) is a cross-sectional view along the line XIC-XIC in Fig. 1 1(a).

### DESCRIPTION OF PREFERRED EMBODIMENTS

The following describes embodiments of the present invention with reference to the drawings. In every drawing, common parts are attached common reference numerals and overlapping descriptions are omitted.

### First Embodiment

### (Assembled Paper Container)

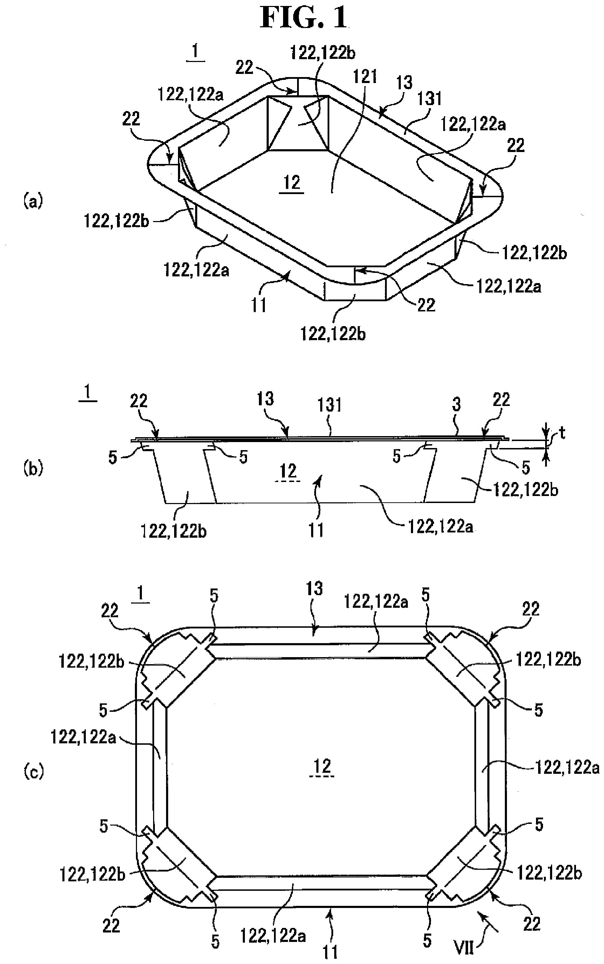

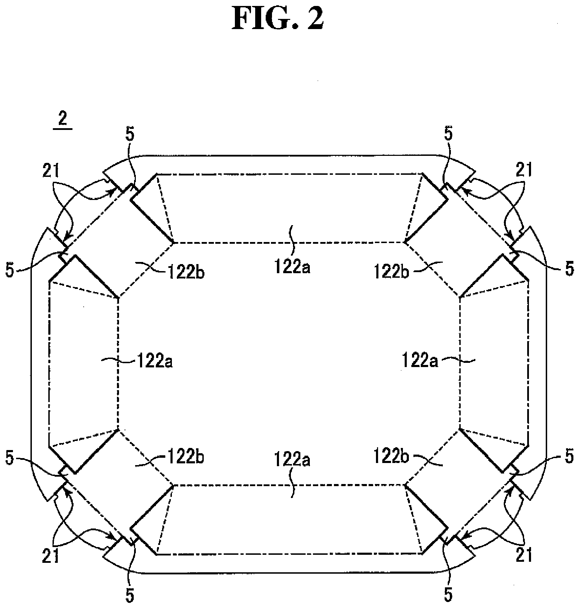

Fig. 1(a) is a perspective view illustrating an exemplary assembled paper container according to a first embodiment. Fig. 1(b) is a side view of the exemplary assembled paper container according to the first embodiment. Fig. 1(c) is a bottom view illustrating the exemplary assembled paper container according to the first embodiment. Fig. 2 is a plan view illustrating an exemplary blank sheet.

An assembled paper container 1 illustrated in Fig. 1(a) to Fig. 1(c) is assembled from a blank sheet 2 illustrated in Fig. 2. The blank sheet 2 uses paper as a main material. In Fig. 2, the dotted lines indicate "trough folds," and the one dot chain lines indicate "mountain folds." The trough fold lines and the mountain fold lines are indicated by, for example, perforations, half cuttings, and ruled lines. Furthermore, the thick solid lines indicate "slits." By performing "trough folds" and "mountain folds" on the blank sheet 2, the assembled paper container 1 can be obtained.

The assembled paper container 1 includes a container main body 11 and a resinous film 3. The container main body 11 includes a housing section 12 and a flange section 13. The container main body 11 includes a bottom surface 121, and a plurality of side surfaces 122 standing upright from the bottom surface 121. The housing section 12 is constituted of the bottom surface 121 and the plurality of side surfaces 122. This embodiment includes eight of the side surfaces 122. Three or more of the side surfaces 122 can constitute the housing section 12. In this embodiment, the side surface 122 includes four side surfaces for molding flange section 122a, and four side surfaces for bonding 122b alternately surrounding the housing section 12. The side surface for bonding 122b is a side surface that bonds together the side surfaces for molding flange section 122a. The housing section 12 has a rectangular shape when viewed from a planar surface, and the side surfaces for bonding 122b are positioned corresponding to four corners of the rectangular shaped housing section 12.

The flange section 13 is connected outwardly to the upper ends of the respective side surfaces 122 from the housing section 12. The flange section 13 includes top surfaces 131. The top surfaces 131 of the flange section 13 become flush after the assembly. The top surfaces 131 of the flange section 13 have gaps 22. The gaps 22 occur on the top surfaces 131 after the assembly by end surfaces 21 of the blank sheet 2 approaching one another.

The resinous film 3 covers an inner surface of the housing section 12, inner surfaces of the side surfaces 122, and the top surfaces 131 of the flange section 13. As the resinous film 3, for example, one having water-tightness and gas diffusibility is selected. An example of the resinous film 3 is a thermoplastic resinous film. Examples of the thermoplastic resinous film may be polyolefin, such as polyethylene (PE) and polypropylene (PP), polyester, such as polyvinyl chloride and polyethylene terephthalate (PET), ethylene-vinyl acetate copolymer (EVA), ethylene-acrylic acid copolymer, polyamide, polyvinylidene chloride, polystyrene, polycarbonate, polybutene, and polyvinyl alcohol. The resinous film 3 may be a single film made of any above-described material, or a film made by mixing a plurality of the above-described materials. Furthermore, the resinous film 3 may be a single layer film or a laminated film laminating a plurality of layers.

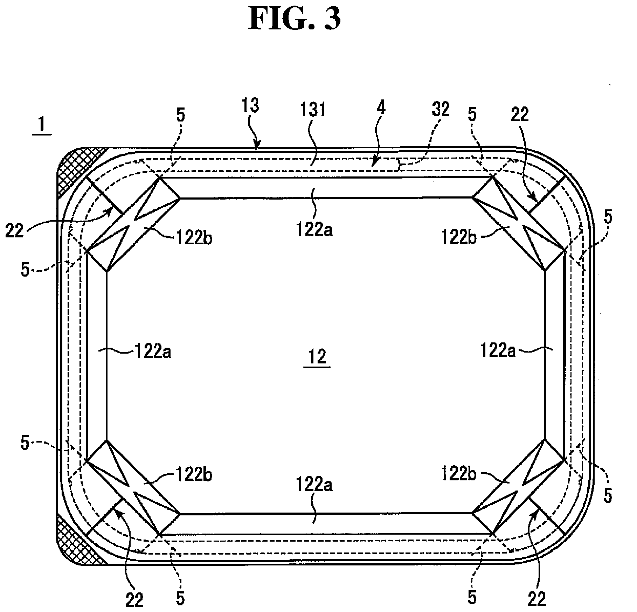

Fig. 3 is a plan view illustrating one example of the housing section covered by the top seal.

As illustrated in Fig. 3, by covering the housing section 12 with a top seal 4, the assembled paper container 1 can pack and house food products and the like in the housing section 12. The top seal 4 is attached to the resinous film 3 on the top surfaces 131 of the flange section 13. Thus, the top seal 4 covers the housing section 12. When attaching the top seal 4 to the resinous film 3, the top seal 4 is pressed by a pressing machine (such as a sealing head) of a pressing machine. The pressing machine presses the top seal 4 in a region indicated as a pressing region 32.

The assembled paper container 1 includes rib sections 5 on the side surfaces 122 below the flange section 13. The rib section 5 has a thickness t in the height direction, and extends from the side surface 122 toward the edge of the flange section 13. The rib sections 5 of this embodiment are molded integrally with one of the side surfaces 122. The rib sections 5 molded integrally with the side surface 122 are flat with respect to the side surface 122.

Furthermore, the rib sections 5 of this embodiment are molded integrally with the side surface for bonding 122b. As illustrated in Fig. 2, the rib sections 5 molded to be the side surface for bonding 122b can be obtained by making parts of the side surface for bonding 122b to project toward the side surface for molding flange sections 122a in, for example, a tongue-shaped form in a state of the blank sheet 2. Accordingly, the rib sections 5 can be obtained from one blank sheet 2, together with the side surface for molding flange sections 122a and the side surfaces for bonding 122b.

Furthermore, the side surface for bonding 122b molded integrally with the rib sections 5 bonds together the side surfaces for molding flange section 122a outside of the side surface for molding flange section 122a. Accordingly, the rib sections 5 are able to project outside the side surface for molding flange sections 122a toward the edge of the flange section 13 below the flange section 13.

Next, a representative effect obtained by the assembled paper container 1 according to the first embodiment is described.

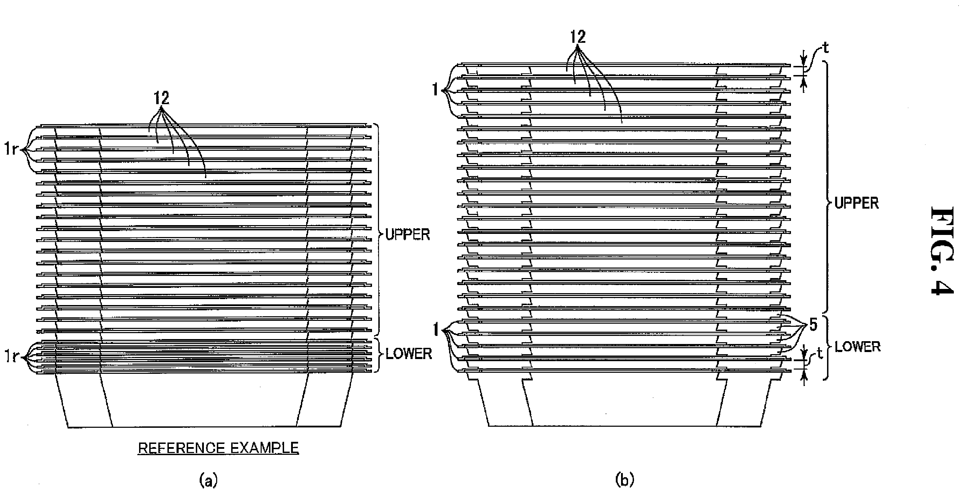

Fig. 4(a) is a side view of when assembled paper containers according to a reference example are stacked. Fig. 4(b) is a side view of when the assembled paper containers according to the first embodiment are stacked.

As illustrated in Fig. 4(a), an assembled paper container 1r according to the reference example does not include a rib section. Therefore, when the assembled paper containers 1r are stacked, the assembled paper containers 1r on the lower level side are weighed down by the assembled paper containers 1r on the upper level side. Thus, in the assembled paper containers 1r on the lower level side, the housing sections 12 deeply fit with one another and the assembled paper containers 1r become difficult to be separated.

In comparison to the reference example, the assembled paper container 1 according to the first embodiment includes the rib sections 5. When the assembled paper containers 1 are stacked, the rib sections 5 allow the assembled paper containers 1 on the lower level side to be separated from the assembled paper containers 1 on the upper level side using the thickness ***t*** in the height direction. The thickness ***t*** in the height direction is thinner than a depth of the housing section 12. Furthermore, an interval at which to separate the assembled paper containers 1 from one another can be set conveniently according to a value of the thickness t in the height direction. Thus, compared with the reference example, the housing sections 12 deeply fitting with one another can be suppressed. Accordingly, the assembled paper container 1 can provide the assembled paper container 1 that allows suppressing the assembled paper containers 1 becoming difficult to be separated even when they are stacked.

Next, several modifications of the assembled paper container according to the first embodiment are described.

### (First Modification)

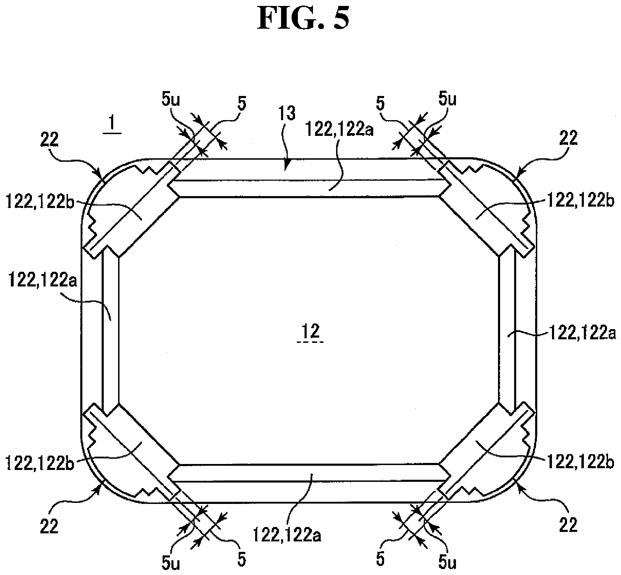

Fig. 5 is a bottom view illustrating the exemplary assembled paper container according to the first modification. The bottom view illustrated in Fig. 5 corresponds to the bottom view illustrated in Fig. 1(c).

As illustrated in Fig. 5, when the rib sections 5 are molded integrally with one of the side surfaces 122, upper end portions 5u of the rib sections 5 may be folded together with the side surface 122 toward the edge of the flange section 13. In this modification, the upper end portions 5u of the rib sections 5 are folded together with the side surface for bonding 122b.

By folding the upper end portions 5u of the rib sections 5 together with the side surface 122, the upper end portions 5u of the rib sections 5 become integrated with the side surface 122 below the flange section 13. In this example, the upper end portions 5u are integrated with the side surface for bonding 122b. Thus, compared with a case where the upper end portions 5u are not folded together with the side surface for bonding 122b, a resistance force against a force that attempts to deform the rib sections 5 is generated in the rib section 5. Therefore, a rigidity of the rib section 5 is increasingly heightened. When the assembled paper containers 1 are stacked while the rigidity of the rib sections 5 are increasingly heightened, the deformation of the rib sections 5 caused by the weight of the assembled paper containers 1 can be suppressed. For example, when the rib sections 5 are deformed, the rib sections 5 may possibly be depressed into the housing section 12, causing the housing sections 12 to deeply fit with one another. The first modification can further suppress such possibility.

### (Second Modification)

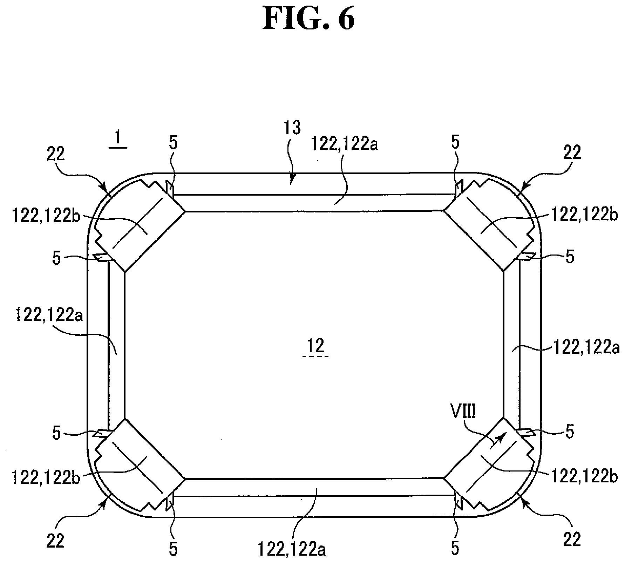

Fig. 6 is a bottom view illustrating an exemplary assembled paper container according to the second modification. The bottom view illustrated in Fig. 6 corresponds to the bottom view illustrated in Fig. 1(c).

As illustrated in Fig. 6, when the rib sections 5 are molded integrally with one of the side surfaces 122, the rib sections 5 may be folded with respect to the side surface 122. One folding example is to fold the rib sections 5 toward a direction away from the housing section 12. In this modification, the rib sections 5 are molded integrally with the side surface for bonding 122b. The rib sections 5 are folded in the direction away from the housing section 12 on the side surface for bonding 122b.

Compared with a case where the rib sections 5 are made flat with respect to the side surface 122, the rib sections 5 folded in the direction away from the housing section 12 allows suppressing the rib section 5 getting deformed toward the housing section 12 to be depressed into the housing section 12. For example, when the rib sections 5 are depressed into the housing section 12, the housing sections 12 deeply fit with one another. The second modification can further suppress the above circumstance.

### (Third Modification)

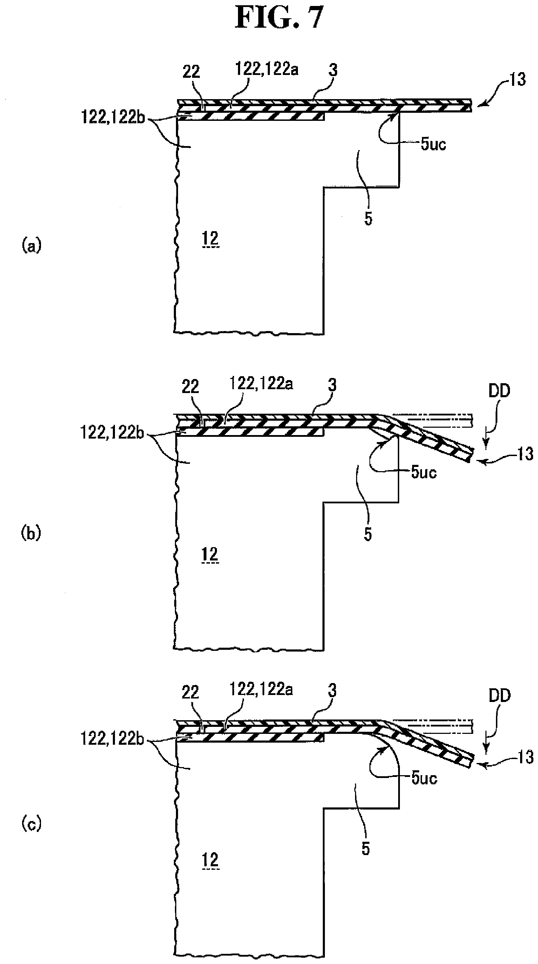

Fig. 7(a) and Fig. 7(b) are side views illustrating the rib section of the assembled paper container according to the first embodiment. Fig. 7(c) is a side view illustrating the rib section of the assembled paper container according to the third modification. Note that, Fig. 7(a) to Fig. 7(c) correspond to a side surface viewed in the arrowhead XII direction in Fig. 1(c).

As illustrated in Fig. 7(a) and Fig. 7(b), when the flange section 13 is deformed in a downward direction DD while an upper end corner part 5uc of the rib section 5 is angular, the upper end corner part 5uc may possibly be deformed. When the upper end corner part 5uc is deformed in the downward direction DD, the rib section 5 may possibly be depressed toward the inside of the housing section 12 depending on the deformed state of the rib section 5. Thus, the housing sections 12 deeply fit with one another.

Therefore, in the third modification, the upper end corner part 5uc of the rib section 5 is rounded to provide a roundness to the upper end corner part 5uc.

As in the third modification, by the upper end corner part 5uc being rounded, even when the flange section 13 is deformed in the downward direction DD, the roundness of the upper end corner part 5uc makes it difficult for the rib section 5 to be deformed. Thus, for example, even when an unintentional flange section 13 is unintentionally deformed, a consequential deformation of the rib section 5 can be suppressed. The third modification can further suppress the above circumstance.

Furthermore, from an aspect of facilitating making slits into the blank sheet 2, the upper end corner part 5uc may be rounded. When the upper end corner part 5uc is angular, it becomes difficult to make slits. The angular corner become a singular point when making slits. The singular point causes difficulty in making the slits and molding. Although the singular point may also depend on a strength and a material quality of the blank sheet 2 in which paper is used as a main material, for example, a breakage may more or less possibly occur in the blank sheet 2 when making the slits or molding.

In consideration of the above-described circumstances, the upper end corner part 5uc is rounded to have a curved line, that is, a rounded shape. Thus, a breakage in the blank sheet 2 can also be suppressed. A breakage in the blank sheet 2 is a phenomenon that may possibly occur in a case where the blank sheet 2 is directly mountain folded or trough folded, in a state where the rib section 5 has a small tongue shape and the blank sheet 2 is not cut out.

Thus, even in terms of facilitating making slits, suppressing a breakage in the blank sheet 2, and the like, the upper end corner part 5uc being rounded is effective.

Note that, the third modification is applicable to the first modification and the second modification, besides the first embodiment. Furthermore, while the third modification is compared with the first embodiment, the third modification does not deny the first embodiment. Whether to employ the first embodiment or the third modification is a matter of choice that can be conveniently chosen by a user.

### (Fourth Modification)

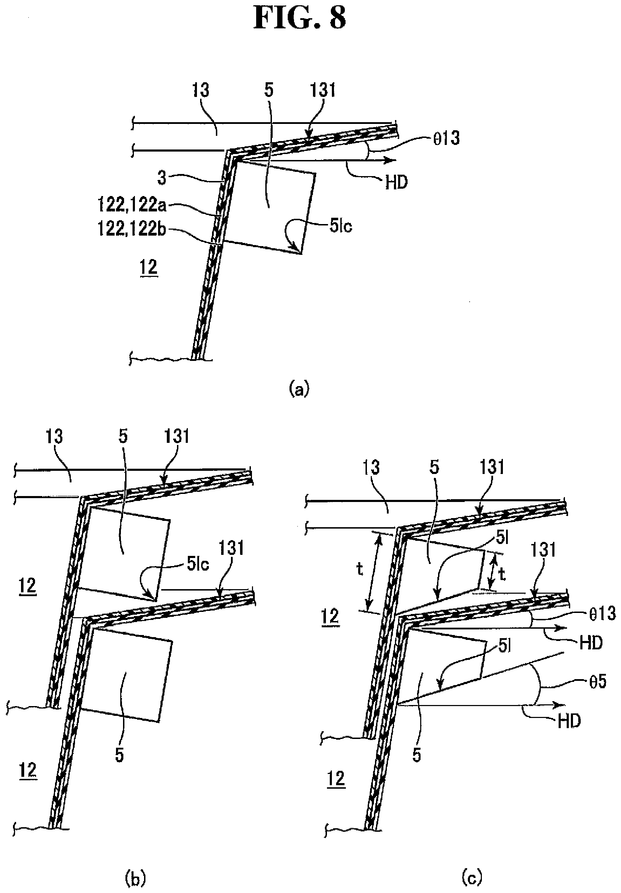

Fig. 8(a) and Fig. 8(b) are side views illustrating the rib section of the assembled paper container according to the second modification. Fig. 8(c) is a side view illustrating the rib section of the assembled paper container according to the fourth modification. Note that, Fig. 8(a) to Fig. 8(c) correspond to a side surface viewed in the arrowhead VIII direction in Fig. 6.

As illustrated in Fig. 8(a), the flange section 13 in practice is often slightly inclined from a horizontal direction HD toward above the housing section 12. An inclination angle from the horizontal direction HD of the flange section 13 is assumed to be "θ13."

When the assembled paper containers 1 are stacked in a state where the flange section 13 is inclined, as illustrated in Fig. 8(b), a lower end corner part 51c of the rib section 5 is brought into contact with the top surface 131 of the flange section 13 of the assembled paper container 1 on the lower level side. Thus, the lower end corner part 51c may possibly be deformed.

Therefore, in the fourth modification, as illustrated in Fig. 8(c), a lower end 5l of the rib section 5 is inclined such that the thickness t in the height direction gradually becomes thinner toward the edge of the flange section 13. For example, an inclination angle from the horizontal direction HD of the lower end 5l is assumed to be "θ5." One example of the inclination angle θ5 is an inclination angle θ13 or more (θ5 ≥ θ13). Thus, the lower end corner part 5lc being directly brought into contact with the top surface 131 of the flange section 13 can be suppressed. Alternatively, the lower end 5l may be brought into contact with the top surface 131 of the flange section 13 in a flat state. Note that, Fig. 8(a) to Fig. 8(c) illustrate a state where the resinous film 3 is attached onto the top surface 131.

According to the fourth modification as described above, the deformation of the lower end corner part 5lc can be suppressed, and thus for example, the housing sections 12 deeply fitting with one another due to the deformation of the lower end corner part 5lc can be suppressed.

Note that, the fourth modification is applicable to the first embodiment, the first modification, and the third modification, besides the second modification. Furthermore, although the fourth modification is compared with the second modification, the fourth modification does not deny the second modification. Whether to employ the second modification or the fourth modification is a matter of choice that can be conveniently chosen by a user.

### Second Embodiment

### (Assembled Paper Container)

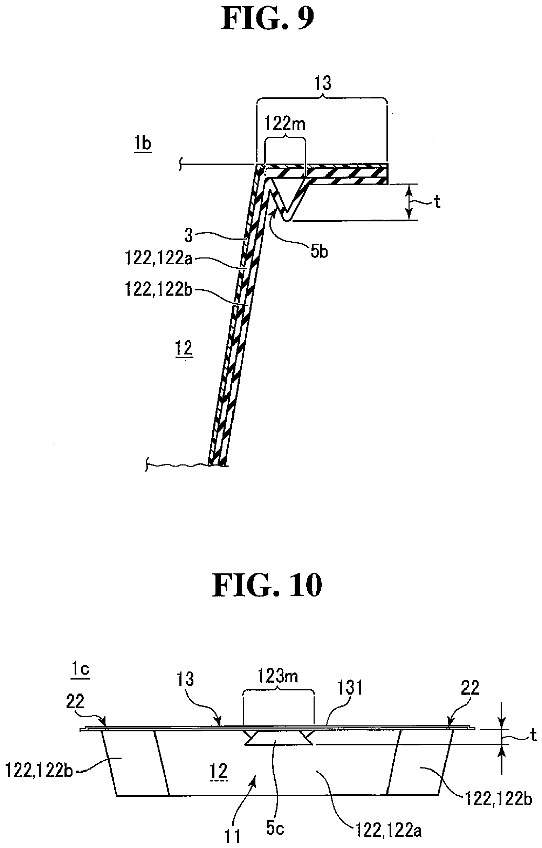

Fig. 9 is a cross-sectional view illustrating an exemplary rib section of the assembled paper container according to the second embodiment.

As illustrated in Fig. 9, in an assembled paper container 1b according to the second embodiment, an intermediate portion 122m of the side surface for bonding 122b is trough folded to generate the thickness t in the height direction. Thus, in the side surface for bonding 122b below the flange section 13, a rib section 5b molded integrally with the side surface for bonding 122b and having the thickness t in the height direction can be obtained.

In the assembled paper container 1b, the rib section 5b having the thickness t in the height direction allows the assembled paper container 1b on the lower level side to be separated from the assembled paper container 1b on the upper level side. Thus, the housing sections 12 deeply fitting with one another is suppressed. Accordingly, the assembled paper container 1b, similarly to the first embodiment, can provide the assembled paper container 1b that allows suppressing the assembled paper containers 1b becoming difficult to be separated even when they are stacked.

### Third Embodiment

### (Assembled Paper Container)

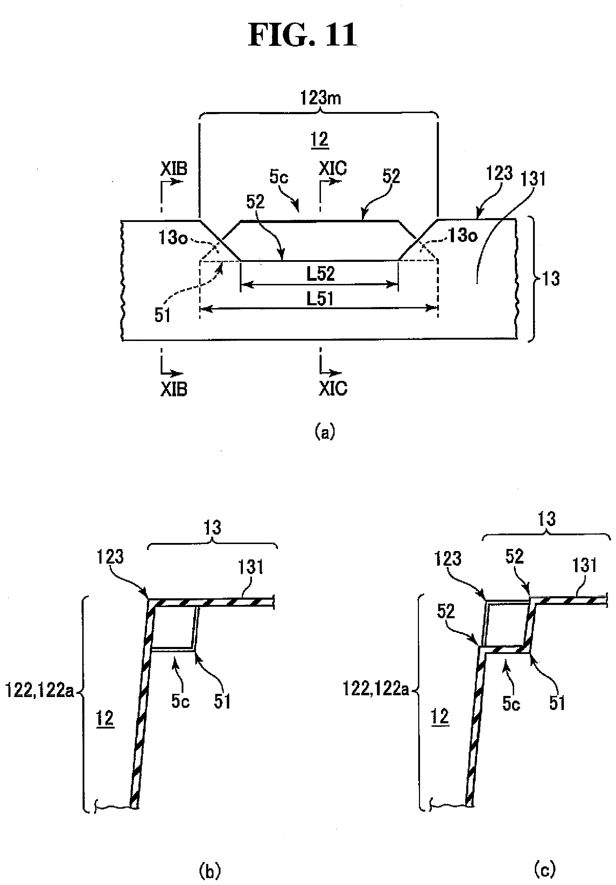

Fig. 10 is a side view illustrating an exemplary assembled paper container according to the third embodiment. Fig. 11(a) is a plan view illustrating a rib section. Fig. 11(b) is a cross-sectional view along the line XIB-XIB in Fig. 11(a). Fig. 11(c) is a cross-sectional view along the line XIC-XIC in Fig. 11(a).

As illustrated in Fig. 10 and Fig. 11(a) to Fig. 11(c), in an assembled paper container 1c according to the third embodiment, an intermediate section 123m positioned in the middle of a mountain folded part 123 separating the flange section 13 and the side surface 122 of the side surface for molding flange section 122a is trough folded toward below the flange section 13 to generate the thickness t in the height direction. Accordingly, below the flange section 13, a rib section 5c molded integrally with the side surface for molding flange section 122a and having the thickness t in the height direction is obtained.

In the assembled paper container 1c, the rib section 5c having the thickness t in the height direction allows the assembled paper container 1c on the lower level side to be separated from the assembled paper container 1c on the upper level side. Thus, the housing sections 12 deeply fitting with one another is suppressed. Accordingly, the assembled paper container 1c, similarly to the first embodiment and the second embodiment, can provide the assembled paper container 1c that allows suppressing the assembled paper containers 1c becoming difficult to be separated even when they are stacked.

Furthermore, the rib section 5c is molded integrally with the side surface for molding flange section 122a by, for example, trough folding and subsequently mountain folding the side surface for molding flange section 122a corresponding to the intermediate section 123m. That is, the rib section 5c is obtained by making a part corresponding to the intermediate section 123m of the side surface for molding flange section 122a project three-dimensionally toward below the flange section 13. Therefore, the rib section 5c is configured including a trough-fold molded section 51 made by trough folding the intermediate section 123m, and a mountain-fold molded section 52 made by mountain folding the side surface for molding flange section 122a.

In the rib section 5c, as illustrated in Fig. 11(a), a length L51 along the mountain folded part 123 of the trough-fold molded section 51, and a length L52 along the mountain folded part 123 of the mountain-fold molded section 52 are differentiated. In the rib section 5c, the length L51 is made longer than the length L52 such that, when viewed from a planar surface, the mountain-fold molded section 52 is encompassed in a range of the trough-fold molded section 51. Thus, in the flange section 13, an overlapping part 13o overlapping with the rib section 5c is obtained. Note that the length L51 may be made shorter than the length L52.

Thus, by providing the overlapping part 13o in the rib section 5c in the third embodiment, the rib section 5c of the assembled paper container 1c on the upper level side fitting with the rib section 5c of the assembled paper container 1c on the lower level side can be suppressed.

Note that, the mountain-fold molded sections 52 are generated in both the flange section 13 and the side surface 122. Among these two mountain-fold molded sections 52, when at least the length L52 of the mountain-fold molded section 52 generated in the flange section 13 is different from the length L51 of the trough-fold molded section 51, the overlapping part 13o can be provided in the rib section 5c.

While the embodiments and modifications of the present invention have been described above, these embodiments and modifications have been presented by way of example only, and are not intended to limit the scope of the invention. The embodiments and modifications of the invention can be performed in a variety of novel embodiments. Therefore, various omissions, substitutions, and changes can be made to the embodiments and modifications described above without departing from the spirit of the invention. Such novel embodiments and modifications are included in the scope of the invention and abstract, and also in the scopes of the invention described in the scope of the claims and their equivalents.

### DESCRIPTION OF REFERENCE SIGNS

- 1:: Assembled paper container (first embodiment)
- 1b:: Assembled paper container (second embodiment)
- 1c:: Assembled paper container (third embodiment)
- 1r:: Assembled paper container (reference example)
- 11:: Container main body
- 12:: Housing section
- 121:: Bottom surface
- 122:: Side surface
- 122a:: Side surface for molding flange section
- 122b:: Side surface for bonding
- 122m:: Intermediate portion
- 123:: Mountain folded part
- 123m:: Intermediate section
- 13:: Flange section
- 131:: Top surface
- 13o:: Overlapping part
- 2:: Blank sheet
- 21:: End surface
- 22:: Gap
- 3:: Resinous film
- 32:: Pressing region
- 4:: Top seal
- 5:: Rib section (first embodiment)
- 5b:: Rib section (second embodiment)
- 5c:: Rib section (third embodiment)
- 5u:: Upper end portion
- 5uc:: Upper end corner part
- Slc:: Lower end corner part
- 5l:: Lower end
- 51:: Trough-fold molded section
- 52:: Mountain-fold molded section
- t:: Thickness in height direction
- DD:: Downward direction
- θ13:: Inclination angle
- θ5:: Inclination angle
- HD: Horizontal direction
- L51:: Length
- L52:: Length

## Claims

1. An assembled paper container assembled from a blank sheet using paper as a main material, the assembled paper container comprising:
a bottom surface;
a plurality of side surfaces standing upright from the bottom surface; and
a flange section connected to the plurality of side surfaces and becoming flush with a top surface after assembly, wherein
the side surface below the flange section is provided with a rib section having a thickness in a height direction and extending from the side surface toward an edge of the flange section.

2. The assembled paper container according to claim 1, wherein
the rib section is molded integrally with one of the side surfaces, and
the rib section molded integrally with the side surface is flat with respect to the side surface.

3. The assembled paper container according to claim 2, wherein
an upper end portion of the rib section is folded together with the side surface toward the edge of the flange section.

4. The assembled paper container according to claim 1, wherein
the rib section is molded integrally with one of the side surfaces, and
the rib section molded integrally with the side surface is folded with respect to the side surface.

5. The assembled paper container according to any one of claims 1 to 4, wherein
an upper end corner part of the rib section is rounded.

6. The assembled paper container according to any one of claims 1 to 5, wherein
a lower end of the rib section has the thickness in the height direction that is inclined to decrease in thickness toward the edge of the flange section.

7. The assembled paper container according to any one of claims 1 to 6, wherein
the plurality of side surfaces include:
a plurality of side surfaces for molding flange section; and
side surfaces for bonding that bond together the side surfaces for molding flange section, and
the rib section is molded integrally with the side surface for bonding.

8. An assembled paper container assembled from a blank sheet using paper as a main material, the assembled paper container comprising:
a bottom surface;
a plurality of side surfaces standing upright from the bottom surface; and
a flange section connected to the plurality of side surfaces and becoming flush with a top surface after assembly, wherein
the plurality of side surfaces include:
a plurality of side surfaces for molding flange section; and
side surfaces for bonding that bond together the side surfaces for molding flange section, and
the side surface for bonding below the flange section is provided with a rib section made by trough folding an intermediate portion of the side surface for bonding to generate a thickness in the height direction.

9. An assembled paper container assembled from a blank sheet using paper as a main material, the assembled paper container comprising:
a bottom surface;
a plurality of side surfaces standing upright from the bottom surface; and
a flange section connected to the plurality of side surfaces and becoming flush with a top surface after assembly, wherein
the plurality of side surfaces include:
a plurality of side surfaces for molding flange section; and
side surfaces for bonding that bond together the side surfaces for molding flange section,
the side surface for molding flange section below the flange section is provided with a rib section including a trough-fold molded section made by trough folding an intermediate section positioned in a middle of a mountain folded part separating the flange section and the side surface toward below the flange section to generate a thickness in a height direction, and a mountain-fold molded section made by mountain folding the side surface for molding flange section, and
a length of the trough-fold molded section and a length of the mountain-fold molded section are differentiated such that the flange section overlaps with the rib section.
